# EUROPEAN PATENT SPECIFICATION

(11) **EP 0 951 424 B1**
(45) Date of publication and mention of the grant of the patent: **19.06.2002**
(21) Application number: 97953863.4
(22) Date of filing: 11.12.1997
(51) Int. Cl.: B65B 7/16

(54) **DEVICE FOR PACKAGING PRODUCTS IN CONTAINERS SEALED WITH STRETCHABLE PLASTIC FILM**
VORRICHTUNG ZUM VERPACKEN VON GEGENSTÄNDEN IN MIT DEHNKUNSTSTOFFFOLIE GESIEGELTEN BEHÄLTERN
DISPOSITIF SERVANT A EMBALLER DES PRODUITS DANS DES RECIPIENTS SCELLES PAR DES FEUILLES PLASTIQUES ETIRABLES

(30) Priority: 17.12.1996 IT MI962637
(43) Date of publication of application: 27.10.1999
(73) Proprietor: MINIPACK-TORRE S.p.A., I-24044 Dalmine (Bergamo) (IT)
(72) Inventor: TORRE, Francesco, I-24044 Dalmine (IT)
(74) Representative: Faraggiana, Vittorio, Dr. Ing.
(86) International application number: EP9707144
(87) International publication number: WO9826983

(56) References cited:
- FR-A- 1 405 789
- US-A- 3 378 991

## Description

This invention refers to a device for packaging products housed on a support with plastic film. Supports suitable for this type of packaging are the polystyrene trays sealed with transparent film, commonly used for packaging fruit, vegetables or other products. However, other types of supports are also utilizable, such as for example flat supports made of cardboard or other materials.

In the case of products which do not protrude from the container compartment, the container can be efficiently sealed quite easily with a relatively rigid and non stretchable film, or sheet, secured to the edge of the compartment by various techniques, for example by sealing or rolling along the edge itself. Rigid film is easily handled for sealing over the tray.

On the contrary, whenever the products, due to their shape and size, protrude from the tray or in the case of products on a flat support, it is not possible to use a rigid sheet to seal the container. In this case it is necessary to use a very fine and consequently more difficult to handle stretchable film, which is tightly wrapped around the tray so as to cover the product to be packaged and peripherally have flaps folded underneath the tray, closely adhering. The folding of the flaps can be carried out either manually or mechanically.

It is obvious that, to ensure that the package is efficiently sealed, it is necessary to keep the peripheral flaps of the film quite long, resulting in an evident waste of material. Moreover, the integrity of the package cannot be guaranteed over time with absolute certainty; in fact, the adhesion of the film to the tray may diminish or the package may be inopportunely opened and then resealed.

FR-A- 1 406 789 discloses a packaging machine provided with a sealing head vertically movable over the product to be packaged, so as to sealing the film along the upper edge of the container. However, this kind of devices involves a serious risk of breaking the film during the sealing operation. Further sealing machines as disclosed by US-A-3 378 991.

The general scope of this invention is to obviate the above-mentioned problems by providing a device for packaging products in containers sealed with tightly stretched extensible plastic film, which makes it possible for the containers to remain sealed over time and to save a considerable quantity of film.

This scope is achieved according to the invention by providing a device for packaging products with plastic film on a base supporting the product, as claimed in claim 1.

The innovative principles of this invention and its advantages with respect to the known technique will be more clearly evident from the following description of a possible exemplificative embodiment applying such principles, with reference to the accompanying drawings, in which:
- Fig. 1 shows a partially cutaway front view of a packaging device according to the invention.
- Fig. 2 shows an enlarged detail, viewed along the line II-II of Fig. 1, of the device according to the invention during a first phase of the packaging operation.
- Fig. 3 shows a view similar to that of Fig. 2, during the subsequent phase of the packaging operation.
- Fig. 4 shows a view similar to that of Fig. 3, during a further phase of the packaging operation.
- Fig. 5 shows a view similar to that of Fig. 4, referring to a variation in the embodiment of the device according to the invention.
- Fig. 6 shows a schematic view of a different embodiment of the film gripping loop.

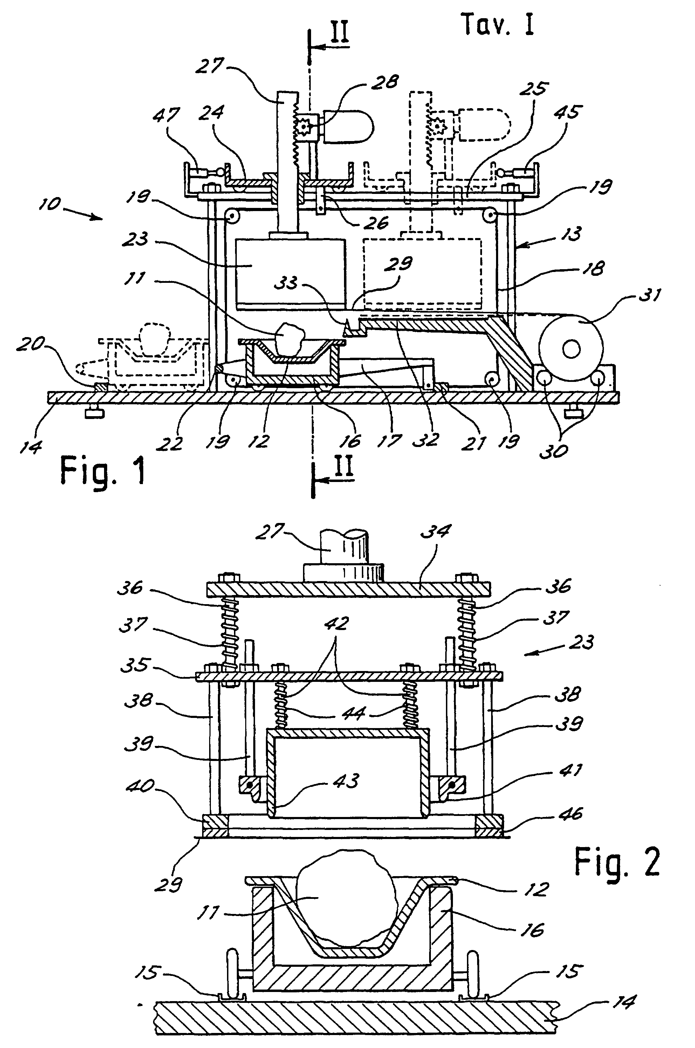

With reference to Fig. 1, a device 10 for packaging products 11 contained in a compartment of a container 12, for example a normal polystyrene tray comprises a frame 13 secured to a bedplate 14. Sliding along the bedplate on runners 15 (visible in Fig. 2) is a saddle 16 to support the container 12.

The saddle 16 is fastened, by means of an arm 17, to a drive cable or belt 18 running in a closed loop around a plurality of pulleys 19 disposed on a substantially vertical plane inside the frame 13.

Disposed along the path of the saddle 16, defined by the runners 15, are detents 20, 21 for positioning the saddle in respective operating positions, which will be described further on. The saddle can be movable between these two positions by manual operation, by means of an appropriate handle 22; in this case, the belt 18 and the pulleys 19 are idle, and made to move by the saddle itself. Alternatively, the saddle can be driven by the belt, by providing a suitable motor drive (not shown) in correspondence with one of the pulleys.

The device 10 also comprises a sealing head 23 (shown only schematically in Fig. 1), which will be described in detail further on, with reference to figures 2, 3 and 4.

The sealing head is borne on a carriage 24 sliding in a horizontal plane along runners 25 disposed in the upper part of the frame 13. Like the saddle 16, the carriage 24 is fastened to the belt 18 by means of an arm 26.

Advantageously, the carriage 24 is connected to a leg of the belt 18 movable in the opposite direction to the leg of the belt to which the container-bearing saddle 16 is fastened. In this way, the carriage 24 and saddle 16 can be operated synchronously with a reciprocal approach/drawing apart motion.

The sealing head 23 is movable vertically with respect to the carriage 24 by means of a known kinematic drive mechanism, for example a coupling between a rack 27 and a motor-driven pinion 28.

The packaging device 10 also comprises a feed unit for the plastic film 29, composed of a rotatable support 30 for a reel 31 of extensible film and a surface 32 for resting the leading end of the film being unwound from the reel.

Advantageously disposed at the end of the surface 32 is a blade 33 for cutting the portion of film 29 necessary for packaging a container.

As can be clearly seen in figures 2, 3, 4, the sealing head 23 comprises an upper plate 34 integral with the rack 27, which is connected to an intermediate plate 35 along runners 36, secured to said intermediate plate. Disposed along the runners 36 are counter springs 37, so as to maintain the two plates in the rest position as far apart from each other as possible. The intermediate plate 35, by means of respective spacers 38, 39, rigidly supports a frame or loop 40 for gripping and stretching the film 29 and a sealing frame or loop 41, containing an appropriate heating element, and also slidingly supports, along runners 42, a stretching pressing loop or frame 43.

Disposed along the runners 42 are further counter springs to maintain the pressing loop at rest as far away from the plate 35 as possible.

It should be noted that, in order to achieve a correct sealing of the film on the container, the loops 41 and 43, and preferably also the gripping loop 40, are made in such a way as to follow the edge of the compartment containing the product to be packaged.

As will be clear further on, the pressing frame is shaped so as to press the taut film against the container in a more internal position with respect to the sealing frame.

The film gripping and stretching frame, on the contrary, is disposed outside the sealing frame.

A brief description will now be given of the operating cycle of the packaging device according to the invention.

The saddle 16 is shifted to the stroke end against the detent 20 (position represented by the broken line in Fig. 1), where it is loaded with a container 12 with the product 11 to be packaged. Simultaneously, thanks to the interconnection between the saddle 16 and the carriage 24 by means of the belt 18, the carriage 24 is pushed into position overlying the surface 32 supporting the film 29, (position also represented by the broken line in Fig. 1).

Here the carriage operates a microswitch 45 which controls the lowering of the sealing head 23 by the rack-pinion coupling.

The head 23 descends towards the surface 32 until the film 29 can be gripped by the gripping loop 40.

Advantageously, the film can be gripped by cohesion or by electrostatic adhesion, by providing the gripping loop 40 with a suitable surface 46. The head then returns to the raised position.

At this point, the saddle 16 can be guided towards the other stroke end 21, arranging itself in a suitable position to seal the container 12 with the film 29.

Simultaneously the carriage 24, pulling the film with it, is shifted by the belt 18 exactly above the container 12 (position shown by the continuous line in Fig.1). Here the carriage 24 operates a second microswitch 47 which controls the descent of the sealing head 23 towards the container 12. The head 23 is now in the position illustrated in Fig.2.

During the first part of the downward stroke of the head 23, the film 29 is cut by the blade 33 in the length required to seal the container 12.

The descent of the frame 40 below the edge of the tray causes the film to be suitably stretched.

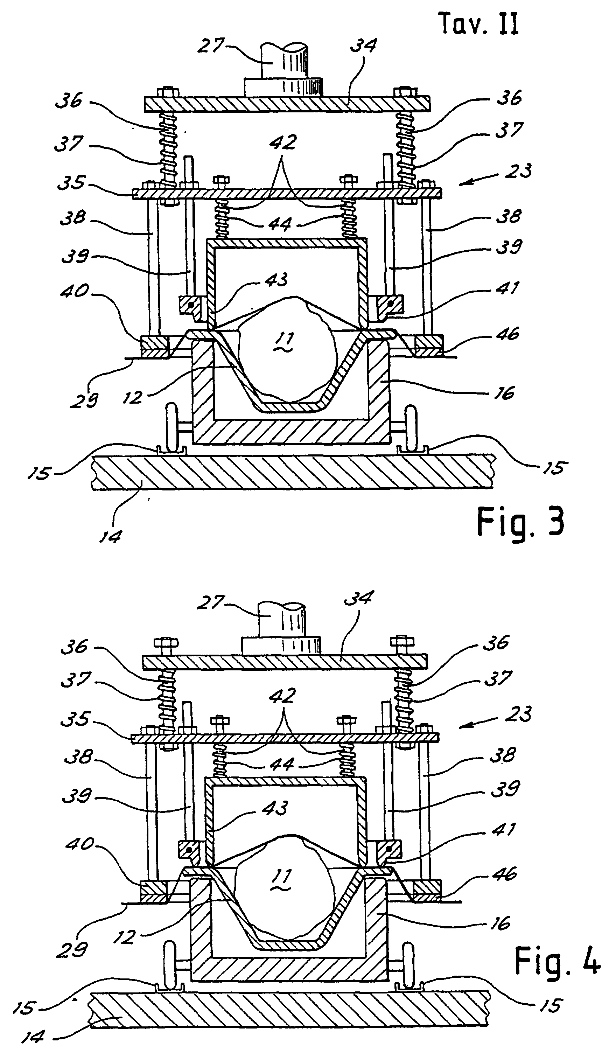

Further descent of the head 23 brings the pressing loop 43 into contact with the edges of the container 12, thereby blocking the taut film over the part of the product protruding from the package. This situation is clearly visible in Fig. 3.

At this point, the pressing loop 43 is blocked in its descent by the container 12. Thanks to the mobility of the intermediate surface 35 with respect to the pressing loop 43 along the runners 42, in contrast with the springs 44, said surface 35 continues its downward stroke, together with the sealing loop 41 and the gripping loop 40.

The film is thus arranged adhering to the edge of the container, despite it being stretched and curved over the product.

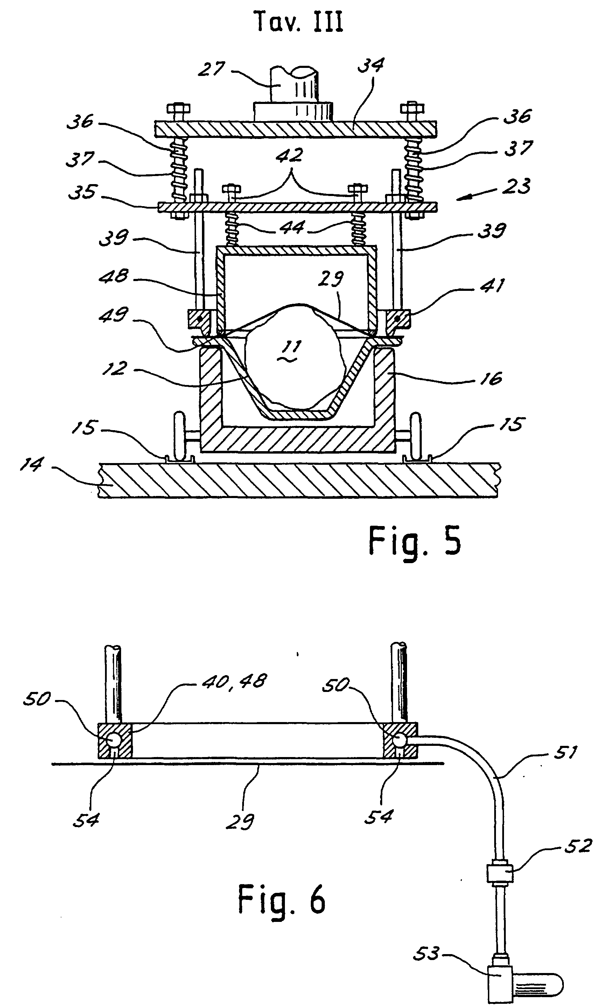

When the sealing loop 41 reaches the container 12, as shown in Fig. 4, the film 29 is sealed onto the edge of the container. It should be noted that the presence of the runners 36, with the springs 37, between the intermediate surface 35 and the upper surface 34 enables the latter to be lowered slightly even further while the film is being sealed, making it possible to exert a substantially uniform sealing pressure around the edge of the container 12.

By using an appropriate timer (not shown in that it is obvious to the expert in the field) it is possible to keep the sealing loop 41 in contact with the edge of the container 12 for a length of time necessary to seal the film completely; after which the head 23 is made to rise.

Lastly, the saddle 16 is returned to the stroke end position that it was in at the beginning of the cycle, so as to allow the sealed container to be removed and replaced with one still to be packaged. Simultaneously, the head 23 returns above the surface 32 and, thanks to the operation of the microswitch 45, descends to grip the end of the film again.

Upon completion of the sealing operation, there may remain a fine strip of film around the edge of the container (easily removable by hand or mechanically), corresponding to the distance between the sealing loop 41 and the gripping loop 40. However, it consists of a portion of waste substantially negligible compared to the strip used for the folding required by conventional packaging systems.

Obviously, thanks to the external frame 40 the film is stretched taut even if the product does not protrude from the tray. By adjusting the length of the supports 38 it is also possible to adjust the stretching of the film.

Fig. 5 shows a variation on the embodiment of the sealing head 23, in which the pressing loop and the film gripping and pulling loop are composed of a single loop 48 provided, in correspondence with the lower edge, with a portion 49 having a cohesive or electrostatic surface for adhesion of the film 29.

This embodiment is particularly advantageous, in that it does away entirely with the problem of scraps of film and makes it possible to simplify the structure of the sealing head 23 by eliminating the loop 40 and relevant supports 38.

It is obvious that the packaging device according to the invention, shown here operating on a tray type container, can also be used with other types of containers, for example, flat supports, with appropriate modifications to the housing 16.

The foregoing description of an embodiment applying the innovative principles of this invention is obviously given by way of example in order to illustrate such innovative principles and should not therefore be understood as a limitation to the sphere of the invention claimed herein.

For example, the film gripping and pulling loop can be operated by suction, instead of by cohesion or electrostatic adherence. As shown schematically in Fig. 6, the gripping loop 40, 48 can be internally provided with an annular chamber 50, connected by means of ducts 51 and solenoid valves 52, to a vacuum pump 53. Suction nozzles 54 connect the annular chamber 50 with the lower film gripping surface.

Moreover, the translation of the film and the container can be achieved in a different way to the one shown. For example, translation of the film to the position above the container to be sealed can be achieved by making the support 32 forming part of the film feed unit horizontally movable. In this case, the sealing head 23 can be fixed in the horizontal plane and simply provided with means for movement in a vertical direction. Likewise, as regards the vertical movement, the head 23 can be made fixed, with the support for the container 12 vertically movable.

## Claims

1. Device for packaging products (11) with plastic film (29) on the base of a support (12) for the product (11) comprising means (16) housing a support (12) in a position to receive the film (29), means (23) for gripping and applying the film (29) on the support (12) and means (41) for sealing the film on the support, the means for gripping and applying the film (29) comprising a movable stretching frame (40, 43, 48) for pressing the plastic film, made of stretchable material, against the outer edge of the support (12) in order to stretch the film over the product on the support (12), the means (41) for sealing the film and the stretching frame (40, 43, 48) consisting of substantially concentric elements ,**characterized in that** the innermost element (43) constitutes a more film pressing frame.

2. Device as claimed in claim 1, **characterized in that** the means (23, 41) for applying and sealing the film (29) and the stretching frame (40, 43, 48) are vertically movable on the position for receiving the film (29) by the support (12).

3. Device as claimed in claim 1, **characterized in that** the stretching frame (40, 43, 48) imprisons the film between itself and the edge of the compartment.

4. Device as claimed in claim 1, **characterized in that** the means (23, 41) for gripping, applying and sealing the film (29) and the stretching frame (40, 43, 48) have a substantially annular lower edge to follow the contours of the support.

5. Device as claimed in claim 4, **characterized in that** the sealing element (41) is disposed between the pressing element (43) and a gripping element (40).

6. Device as claimed in claim 4, **characterized in that** the element (43) constituting the film pressing frame (29) is elastically movable in a vertical direction with respect to the elements constituting the means for gripping (40) and sealing (41) the film (29), which in turn are elastically movable in a vertical direction with respect to a support (34) which is vertically movable with respect to the support (12) supporting the product to be packaged.

7. Device as claimed in claim 4, **characterized in that** the elements for gripping and stretching the film (29) consist of a single loop (48) elastically movable in a vertical direction with respect to the sealing element (41), which in turn is elastically movable in a vertical direction with respect to a support (34) which is vertically movable with respect to the support (12) supporting the product to be packaged.

8. Device as claimed in claims 6 and 7, **characterized in that** it comprises springs (37, 44) inserted along respective runners (36, 42) for said elastic movability of the parts.

9. Device as claimed in claim 4, **characterized in that** the loops (40, 48) for gripping the film (29) are provided with a portion (46, 49) having a cohesive surface for adhesion of the film.

10. Device as claimed in claim 4, **characterized in that** the loops (40, 48) for gripping the film (29) are provided with a vacuum chamber (50) with suction nozzles (54) for gripping the film.

11. Device as claimed in claim 10, **characterized in that** the vacuum chamber (50) is connected to a vacuum pump (53).

12. Device as claimed in claim 1, **characterized in that** the elements constituting means (23, 41) for gripping, applying and sealing the film (29) and the stretching frame (40, 43) are supported in a head (23) which is vertically movable to bring it close to the support for the product to be packaged.

13. Device as claimed in claim 12, **characterized in that** the head (23) is movable horizontally between a first position in which it grips the film (29) from a film feed unit (31, 32) and a second position in which it attaches the film onto the support (12) of the product to be packaged.

14. Device as claimed in claim 1, **characterized in that** the means housing the support (12) consist of a saddle (16) movable in a horizontal plane between a first position for loading a support to be packaged and unloading a packaged support and a second position for receiving the film (29).

15. Device as claimed in claims 13 and 14, **characterized in that** the saddle (16) and the head (23) are movable in synchronism between the respective first and second operating positions.

16. Device as claimed in claim 15, **characterized in that** the saddle (16) and the head (23) are secured to a belt-driven pulling means (18), in correspondence with legs of the belt movable in opposite directions to each other in order to achieve a reciprocal approach/drawing apart movement of the saddle (16) and head (23).

17. Device as claimed in claim 13, **characterized in that** the head (23) is supported, vertically movable, by a carriage (24) horizontally movable on a plane (25) between two positions corresponding to said first and second position of the head (23).

18. Device as claimed in claim 17, **characterized in that** the head (23) is vertically movable with respect to the carriage (24) by means of a rack coupling (27, 28).

19. Device as claimed in claim 13, **characterized in that** the film feed unit comprises a surface (32) for resting a leading portion of the film (29) from a feed reel (31), a blade (33) being disposed at the end of the surface (32) for cutting the portion of film necessary to package a support (12).

20. Device as claimed in claim 17, **characterized in that**, disposed in correspondence with the stroke end positions of the carriage (24) are microswitches (45, 47) for automatic control by the carriage of the vertical movement of the head (23).

21. Device as claimed in claim 1, **characterized in that** the support (12) consists of a tray at least partially housing the product (11).

## Patentansprüche

1. Vorrichtung zum Verpacken von Produkten (11) mit einer Kunststofffolie (29) auf der Basis einer Unterlage (12) für das Produkt (11) und mit einem Mittel (16), in dem eine Unterlage (12) in einer Position zur Aufnahme des Films (29) sitzt, einem Mittel (23) zum Ergreifen und Anlegen des Films (29) auf die Unterlage (12), und einem Mittel (41) zum Abdichten des Films auf der Unterlage, wobei das Mittel zum Ergreifen und Anlegen des Films (29) einen beweglichen Streckrahmen (40, 43, 48) aufweist, um den aus streckbarem Material bestehenden Kunststofffilm gegen den äußeren Rand der Unterlage (12) zu pressen, um den Film über dem Produkt auf der Unterlage (12) zu strecken, wobei das Mittel (41) zum Abdichten des Films und der Streckrahmen (40, 43, 48) aus im wesentlichen konzentrischen Elementen bestehen, **dadurch gekennzeichnet, dass** das innerste Element (43) lediglich einen eigentlichen Film-Pressrahmen bildet.

2. Vorrichtung nach Anspruch 1, **dadurch gekennzeichnet, dass** das Mittel (23, 41) zum Anlegen und Abdichten des Films (29) und der Streckrahmen (40, 43, 48) an der Position zum Aufnehmen des Films (29) durch die Unterlage (12) vertikal beweglich sind.

3. Vorrichtung nach Anspruch 1, **dadurch gekennzeichnet, dass** der Strackrahmen (40, 43, 48) den Film zwischen sich selbst und dem Rand des Abteils eingeschlossen hält.

4. Vorrichtung nach Anspruch 1, **dadurch gekennzeichnet, dass** das Mittel (23, 41) zum Ergreifen, Anlegen und Abdichten des Films (29) und der Streckrahmen (40, 43, 48) einen im wesentlichen ringförmigen unteren Rand haben, um den Umrissen der Unterlage zu folgen.

5. Vorrichtung nach Anspruch 4, **dadurch gekennzeichnet, dass** das Abdichtelement (41) zwischen dem Presselement (43) und einem Greifelement (40) angeordnet ist.

6. Vorrichtung nach Anspruch 4, **dadurch gekennzeichnet, dass** das Element (43) das den Film-Pressrahmen (29) bildet, in einer vertikalen Richtung elastisch beweglich ist bezüglich der Elemente, die das Mittel zum Ergreifen (40) und Abdichten (41) des Films (29) bilden, die ihrerseits elastisch beweglich sind in einer vertikalen Richtung bezüglich einer Unterlage (34), die vertikal beweglich ist bezüglich der Unterlage (12), die das zu verpackende Produkt trägt.

7. Vorrichtung nach Anspruch 4, **dadurch gekennzeichnet, dass** die Elemente zum Ergreifen und Strecken des Films (29) aus einer einzigen Schleife (48) bestehen, die in einer vertikalen Richtung bezüglich des Abdichtungselements (41) elastisch beweglich ist, das seinerseits in einer vertikalen Richtung bezüglich einer Unterlage (34) elastisch beweglich ist, die bezüglich der Unterlage (12), die das zu verpackende Produkt trägt, vertikal beweglich ist.

8. Vorrichtung nach Anspruch 6 und 7, **dadurch gekennzeichnet, dass** sie Federn (37, 44) aufweist, die entlang jeweiliger Schienen (36, 42) eingesetzt sind, um die elastische Beweglichkeit der Teile zu erzielen.

9. Vorrichtung nach Anspruch 4, **dadurch gekennzeichnet, dass** die Schleifen (40, 48) zum Ergreifen des Films (29) mit einen Abschnitt (46, 49) versehen sind, der eine Haftfläche für das Haften des Films hat.

10. Vorrichtung nach Anspruch 4, **dadurch gekennzeichnet, dass** die Schleifen (40, 48) zum Ergreifen des Films (29) mit einer Vakuumkammer (50) mit Saugdüsen (54) zum Ergreifen des Films versehen sind.

11. Vorrichtung nach Anspruch 10, **dadurch gekennzeichnet, dass** die Vakuumkammer (50) mit einer Vakuumpumpe (53) verbunden ist.

12. Vorrichtung nach Anspruch 1, **dadurch gekennzeichnet, dass** die Elemente, welche das Mittel (23, 41) zum Ergreifen, Anlegen und Abdichten des Films (29) bilden, und der Streckrahmen (40, 43) in einem Kopf (23) gelagert sind, der vertikal beweglich ist, um ihn in die Nähe der Unterlage für das zu verpackende Produkt zu bringen.

13. Vorrichtung nach Anspruch 12, **dadurch gekennzeichnet, dass** der Kopf (23) horizontal beweglich ist zwischen einer ersten Position, in der er den Film (29) von einer Filmzufuhreinheit (31, 32) ergreift, und einer zweiten Position, in der er den Film auf der Unterlage (12) des zu verpackenden Produkts befestigt.

14. Vorrichtung nach Anspruch 1, **dadurch gekennzeichnet, dass** das Mittel, in dem die Unterlage (12) sitzt, aus einem Sattel (16) besteht, der in einer horizontalen Ebene beweglich ist zwischen einer ersten Position zum Aufladen einer zu verpackenden Unterlage und Abladen einer verpackten Unterlage, und einer zweiten Position zur Aufnahme des Films (29).

15. Vorrichtung nach Anspruch 13 und 14, **dadurch gekennzeichnet, dass** der Sattel (16) und der Kopf (23) zwischen der ersten bzw. der zweiten Betriebsposition synchron beweglich sind.

16. Vorrichtung nach Anspruch 15, **dadurch gekennzeichnet, dass** der Sattel (16) und der Kopf (23) an einem riemengetriebenen Zugmittel (18) befestigt sind, und zwar bei den Beinen des Riemens und in zueinander entgegengesetzten Richtungen beweglich, um eine heranführende/auseinanderziehende Hin- und Herbewegung des Sattels (16) und des Kopfes (23) zu erzielen.

17. Vorrichtung nach Anspruch 13, **dadurch gekennzeichnet, dass** der Kopf (23) vertikal beweglich gelagert ist mittels eines Wagens (24), der auf einer Ebene (25) zwischen zwei Positionen horizontal beweglich ist, die der ersten und der zweiten Position des Kopfes (23) entsprechen.

18. Vorrichtung nach Anspruch 17, **dadurch gekennzeichnet, dass** der Kopf (23) bezüglich des Wagens (24) mittels einer Zahnstangenverbindung (27, 28) vertikal beweglich ist.

19. Vorrichtung nach Anspruch 13, **dadurch gekennzeichnet, dass** die Filmnzufuhreinheit eine Fläche (32) zum Ablegen eines führenden Abschnitts des Films (29) von einer Zufuhrspule (31) aufweist, wobei eine Klinge (33) am Ende der Fläche (32) angeordnet ist, Um den zum Verpacken einer Unterlage (12) notwendigen Abschnitt des Films zu schneiden.

20. Vorrichtung nach Anspruch 17, **dadurch gekennzeichnet, dass** an den Hubendpositionen des Wagens (24) Mikroschalter (45, 47) angeordnet sind zur automatischen Steuerung der vertikalen Bewegung des Kopfes (23) mittels des Wagens.

21. Vorrichtung nach Anspruch 1, **dadurch gekennzeichnet, dass** die Unterlage (12) aus einer das Produkt (11) zumindest teilweise enthaltenden Schale besteht.

## Revendications

1. Dispositif servant à emballer des produits (11) avec un film plastique (29) sur la base d'un support (12) pour le produit (11), comprenant des moyens (16) renfermant un support (12) dans une position pour recevoir le film (29), des moyens (23) pour saisir et appliquer le film (29) sur le support (12) et des moyens (41) pour sceller le film sur le support, les moyens pour saisir et appliquer le film (29) comprenant un cadre d'étirage mobile (40,43,48) pour appuyer le film plastique, réalisé en un matériau étirable, contre le bord extérieur du support (12) pour étirer le film par dessus le produit sur le support (12), les moyens (41) pour sceller le film et le cadre d'étirage (40,43,48) consistant en éléments sensiblement concentriques, dispositif **caractérisé en ce que** l'élément le plus à l'intérieur (43) constitue un simple cadre d'appui de film.

2. Dispositif selon la revendication 1, **caractérisé en ce que** les moyens (23,41) pour appliquer et sceller le film (29) et le cadre d'étirage (40,43,48) sont mobiles verticalement sur la position pour recevoir le film (29) par le support (12).

3. Dispositif selon la revendication 1, **caractérisé en ce que** le cadre d'étirage (40,43,48) emprisonne le film entre lui-même et le bord du compartiment.

4. Dispositif selon la revendication 1, **caractérisé en ce que** les moyens (23,41) pour saisir, appliquer et sceller le film (29) et le cadre d'étirage (40,43,48) ont un bord inférieur sensiblement annulaire pour épouser les contours du support.

5. Dispositif selon la revendication 4, **caractérisé en ce que** l'élément de scellement (41) est disposé entre l'élément d'appui (43) et un élément de saisie (40).

6. Dispositif selon la revendication 4, **caractérisé en ce que** l'élément (43) constituant le cadre d'appui de film (29) est mobile élastiquement dans une direction verticale par rapport aux éléments constituant les moyens pour saisir (40) et sceller (41) le film (29) qui, quant à eux, sont élastiquement mobiles dans une direction verticale par rapport à un support (34) qui est mobile verticalement par rapport au support (12) soutenant le produit à emballer.

7. Dispositif selon la revendication 4, **caractérisé en ce que** les éléments pour saisir et étirer le film (29) consistent en une seule boucle (48) élastiquement mobile dans une direction verticale par rapport à l'élément de scellement (41) qui, quant à lui, est mobile élastiquement dans une direction verticale par rapport à un support (34) qui est mobile verticalement par rapport au support (12) soutenant le produit à emballer.

8. Dispositif selon les revendications 6 et 7, **caractérisé en ce qu'**il comprend des ressorts (37,44) insérés le long de glissières respectives (36,42) pour ladite mobilité élastique des pièces.

9. Dispositif selon la revendication 4, **caractérisé en ce que** les boucles (40,48) pour saisir le film (29) sont munies d'une portion (46,49) ayant une surface cohésive pour l'adhérence du film.

10. Dispositif selon la revendication 4, **caractérisé en ce que** les boucles (40,48) pour saisir le film (29) sont munies d'une chambre de vide (50) avec des tuyères d'aspiration (54) pour saisir le film.

11. Dispositif selon la revendication 10, **caractérisé en ce que** la chambre de vide (50) est raccordée à une pompe de vide (53).

12. Dispositif selon la revendication 1, **caractérisé en ce que** les éléments constituant les moyens (23,41) pour saisir, appliquer et sceller le film (29) et le cadre d'étirage (40,43) sont montés dans une tête (23) qui est mobile verticalement pour se rapprocher du support pour emballer le produit.

13. Dispositif selon la revendication 12, **caractérisé en ce que** la tête (23) est mobile horizontalement entre une première position dans laquelle elle saisit le film (29) à partir d'une unité d'alimentation de film (31,32) et une seconde position dans laquelle elle fixe le film sur le support (12) du produit à emballer.

14. Dispositif selon la revendication 1, **caractérisé en ce que** les moyens renfermant le support (12) consistent en une selle (16) mobile dans un plan horizontal entre une première position pour charger un support à emballer et décharger un support à emballer et une seconde position pour recevoir le film (29).

15. Dispositif selon les revendications 13 et 14, **caractérisé en ce que** la selle (16) et la tête (23) sont mobiles en synchronisation entre les première et seconde positions de fonctionnement.

16. Dispositif selon la revendication 15, **caractérisé en ce que** la selle (16) et la tête (23) sont fixées sur des moyens de traction (18) commandés par une courroie, en correspondance avec les branches de la courroie mobiles dans des directions opposées pour obtenir un mouvement d'approche/séparation de la selle (16) et de la tête (23) entre elles.

17. Dispositif selon la revendication 13, **caractérisé en ce que** la tête (23) est supportée, verticalement mobile, par un chariot (24) horizontalement mobile sur un plan (25) entre deux positions correspondant à ladite première et à ladite seconde position de la tête (23).

18. Dispositif selon la revendication 17, **caractérisé en ce que** la tête (23) est mobile verticalement par rapport au chariot (24) au moyen d'un accouplement à crémaillère (27,28).

19. Dispositif selon la revendication 13, **caractérisé en ce que** l'unité d'alimentation de film comprend une surface (32) de repos d'une portion d'attaque du film (29) à partir d'une bobine d'alimentation (31), une lame (33) étant disposée à l'extrémité de la surface (32) pour découper la portion de film nécessaire pour emballer un support (12).

20. Dispositif selon la revendication 17, **caractérisé en ce qu'**il est prévu, dans un agencement correspondant aux positions de fin de course du chariot (24), des microcontac teurs (45,47)pour la commande automatique par le chariot du mouvement vertical de la tête (23).

21. Dispositif selon la revendication 1, **caractérisé en ce que** le support (12) consiste en un plateau renfermant au moins partiellement le produit (11).
